# FASCICULE DE BREVET EUROPEEN

(11) **EP 3 233 971 B1**
(45) Date de publication et mention de la délivrance du brevet: **11.05.2022**
(21) Numéro de dépôt: 15817245.2
(22) Date de dépôt: 17.12.2015
(51) Int. Cl.: C08G 73/10

(54) **PROCEDE DE FABRICATION DE POLYIMIDES AROMATIQUES**
HERSTELLUNGSVERFAHREN VON AROMATISCHEN POLYIMIDEN
METHOD FOR MANUFACTURING AROMATIC POLYIMIDES

(30) Priorité: 18.12.2014 EP 14307091
(43) Date de publication de la demande: 25.10.2017
(73) Titulaire: Rhodia Operations, 93300 Aubervilliers (FR)
(72) Inventeur: TERNISIEN, Thomas, 69006 Lyon (FR)
(74) Mandataire: Lederer & Keller Patentanwälte Partnerschaft mbB
(86) Numéro de dépôt international: PCT/EP2015/080378
(87) Numéro de publication internationale: WO 2016/097233

(56) Documents cités:
- FR-A1- 2 980 202
- JP-A- 2000 297 152
- JP-A- 2001 098 070
- JP-A- 2013 256 642

## Description

La présente invention concerne des polyimides thermoplastiques aromatiques et leur préparation.

Plus précisément, l'invention concerne un procédé de fabrication de polyimides thermoplastiques aromatiques par polymérisation d'un ou plusieurs sel(s) de carboxylate d'ammonium formé(s) à partir d'un ou plusieurs acide(s) tétracarboxylique(s) aromatique(s) et d'une ou plusieurs diamine(s).

Les polyimides, et notamment les polyimides aromatiques, sont connus pour leurs propriétés thermiques et/ou mécaniques remarquables, ce qui les destine en particulier à des applications hautes performances dans différents domaines tel que l'aéronautique ou encore l'électronique (cartes de circuits imprimés par exemple).

Néanmoins, ces polyimides aromatiques sont considérés comme thermodurs et infusibles et nécessitent l'utilisation de procédés de synthèse en solution dans des solvants toxiques, notamment cancérigènes ou potentiellement cancérigènes pour certains, et/ou non amicaux pour l'environnement à partir de diamines aromatiques et de dianhydrides aromatiques. Le procédé de synthèse des polyimides le plus connu et répandu est un procédé en deux étapes qui consiste à faire réagir dans une première étape dans un solvant, comme le diméthyle acétamide, les crésols ou encore dans la N-méthylpyrrolidone, un dianhydride aromatique avec une diamine aromatique pour former un intermédiaire appelé polyacide amique, qui est ensuite transformé en polyimide dans une seconde étape par élévation de la température ou par une déshydratation chimique.

Lors de la première étape, les amines ouvrent les cycles anhydride et donnent lieu à une fonction amide acide appelée souvent acide amique. Le polyacide amique formé est soluble dans le solvant de synthèse et est transformé par cyclisation en polyimide qui le plus souvent est insoluble. Par exemple, pour faire un film en polyimide, on verse une solution de poly(acide amique) sur une surface chauffante. Lors du chauffage de la surface chauffante, le solvant s'évapore et la cyclisation se fait : on obtient alors un film de polyimide. JP 2013 256642 décrit une composition d'agent d'enrobage contenant une solution ayant comme soluté un sel obtenu par réaction d'acide benzophénonetétracarboxylique et de m-xylylènediamine, et comme solvant un mélange d'eau et d'un alcool. Le rapport de l'alcool dans le mélange est ≥ 1% en masse et ≤ 40% en masse. L'alcool est choisi dans le groupe constitué par le méthanol, l'éthanol, le n-propanol, l'isopropanol, le n-butanol, l'isobutanol, le t-butanol, le butylcellosolve et l'éther monométhylique de propylène glycol.

Pour rendre les polyimides aromatiques fusibles, donc transformables, par les techniques d'extrusion ou d'injection notamment, il est connu d'utiliser des diamines aromatiques plus flexibles donnant lieu à des polyimides amorphes de température de transition vitreuse Tg proche de 200°C connus sous le nom de polyétherimide dont Ultem est un nom commercial. Des procédés développés consistent à réaliser la polymérisation à l'état fondu entre 275 et 290°C comme dans le brevet US3833546 à partir d'un mélange direct de dianhydride aromatique et de diamine aromatique ou d'acide tétracarboxylique aromatique et de diamine aromatique. Dans ce cas, le contrôle de la stoechiométrie des réactifs n'est pas optimal, des réactions de dégradation rapides ont lieu. Un inconvénient est que lorsque la température d'utilisation est supérieure à la température de transition vitreuse Tg du polyimide, le polyimide perd sa tenue mécanique en raison de son caractère amorphe. Enfin, en tant que polymère amorphe, les propriétés mécaniques dépendent principalement de la masse molaire qui doit être supérieure à la masse molaire entre enchevêtrements : pour ces polymères, cela implique d'avoir des masses molaires non négligeables, ce qui s'accompagne d'une viscosité importante à l'état fondu. Ces polyimides aromatiques flexibles sont malgré tout considérés comme des thermoplastiques.

Les polyimides semi-aromatiques constituent également une approche intéressante car ils peuvent être semi-cristallins et avoir des températures de fusion compatibles avec les températures de transformation des thermoplastiques, une température de fusion généralement inférieure à 330°C, et donc être transformables par les procédés de mise en œuvre connus pour les thermoplastiques, similaires à des polyamides, tout en bénéficiant d'une excellente tenue en température.

Il existe différentes méthodes de synthèse, à commencer par la synthèse en solution comme décrite pour les polyimides aromatiques. Un exemple de synthèse en solution de polyimide est décrite par Cor Koning dans la revue Polymer 1998, volume 39, 16, pages 3697-3702. Les auteurs synthétisent des polyimides en solution à partir de dianhydride 3,3'-4,4'-biphényletétracarboxylique et de diamines aliphatiques contenant entre 4 et 10 groupes méthylènes. Les polyimides obtenus possèdent des températures de fusion inférieures à 330°C. Des polymérisations à l'état fondu sont décrites dans le brevet US2710853 ou US2867609 à partir de diamine aliphatique et d'anhydride pyromellitique ou de dérivés diester diacide d'anhydride pyromellitique selon des procédés connus de synthèse de polyamides. L'inconvénient majeur de cette technique est qu'elle nécessite de choisir une température de synthèse supérieure à la température de fusion du polyimide formé pendant des temps longs, ce qui engendre des dégradations thermiques significatives et importantes.

Pour remédier à ce problème, une équipe japonaise (Inoue et al dans Macromolecules 1997, 30, 1921 -1928 "High Pressure Synthesis of Aliphatic-Aromatic Polyimides via Nylon-Salt-Type Monomers derived from aliphatic diamines and pyromellitic acid and biphenyltetracarboxylic acid") a identifié une méthode de polymérisation de sel d'acide tétracarboxylique aromatique et de diamines aliphatiques à l'état solide. Les auteurs préparent ainsi un sel qui est pressé sous des pressions de plusieurs centaines de bar pour donner lieu à des objets tels des disques, et chauffent ensuite les disques formés à une température donnée sous différentes pressions. Lors du chauffage, la réaction se produit et génère de l'eau, ce qui montre que la réaction a eu lieu et se ferait très rapidement.

Le problème des procédés envisagés par ces auteurs réside dans le fait qu'il est nécessaire d'extraire l'eau de réaction formée lors de la mise en forme, ce qui peut engendrer des défauts dans les pièces, des temps longs de transformation engendrant des coûts de transformation excessifs et/ou peuvent donner des pièces de qualité non optimale avec des problèmes de porosité et d'aspect de surface, ou encore nécessiter d'adapter et/ou de changer les équipements destinés à l'utilisation de polymères non réactifs.

En outre, les procédés existants peuvent se révéler insatisfaisants en termes de contrôle de la structure, de la masse molaire et/ou de la viscosité du polyimide. Or, le contrôle de ces paramètres est particulièrement important, en particulier en fonction des applications auxquelles ces polymères sont destinés.

Afin de faire face à ces différents problèmes, un procédé amélioré d'obtention de particules solides de polyimides semi-aromatiques et semi-cristallins a été décrit dans la demande de brevet WO 2013/041528. Il s'agit tout d'abord de faire réagir au moins une diamine avec au moins un acide tétracarboxylique aromatique afin d'obtenir un sel. Cette première étape peut être effectuée en présence d'un limiteur de chaînes et/ou d'un excès d'un des monomères. Une polymérisation à l'état solide du sel est alors réalisée à une température supérieure à la température de transition vitreuse Tg du polyimide à obtenir tout en restant inférieure à la température de fusion du sel obtenu lors de la première étape. La masse molaire des particules solides de polyimides obtenues est notamment contrôlée par la quantité de limiteur de chaînes et/ou d'excès d'un des monomères introduite au cours de la première étape.

La Demanderesse s'est aperçue que cette méthode de synthèse n'était pas totalement satisfaisante et qu'il était possible de préparer de manière encore plus efficace des polyimides aromatiques et semi-cristallins.

La présente invention a pour objet de proposer une solution permettant d'une part de résoudre l'ensemble des problèmes mentionnés ci-dessus et d'autre part d'améliorer les procédés existants notamment en termes de rendement et de contrôle des caractéristiques des polyimides obtenus.

Le procédé de fabrication d'un polyimide aromatique selon l'invention comprend les étapes suivantes :
(a) préparation d'un ou plusieurs sel(s) en faisant réagir un ou plusieurs acide(s) tétracarboxylique(s) aromatique(s) à l'état solide et une ou plusieurs diamine(s), optionnellement en présence d'un ou plusieurs limiteur(s) de chaînes, en présence d'un ou plusieurs liants, comprenant un ou plusieurs liquide(s) organique(s), en une quantité de 1 à 25% en poids par rapport au poids total du ou des acide(s) tétracarboxylique(s) aromatique(s), de la ou des diamine(s) et du ou des limiteur(s) de chaînes éventuel(s), puis ;
(b) polymérisation du ou des sel(s) obtenu(s) à l'étape (a).

Le procédé selon l'invention permet de préparer de manière industrielle, efficace et fiable des polyimides aromatiques pour diverses applications. Les polyimides obtenus sont des thermoplastiques semi-cristallins et ont comme propriété de ne pas libérer ou absorber de l'eau lors des étapes ultérieures de transformation comme par exemple la pultrusion, l'extrusion, ou le moulage par injection. Ils peuvent être notamment obtenus sous forme de poudre de granulométries contrôlées.

On peut notamment utiliser ces poudres pour la réalisation d'articles composites, pour la production d'articles par frittage laser, pour le revêtement, ou dans le domaine de la cosmétique.

Selon l'invention, l'utilisation d'une quantité particulière de liant lors de la préparation du ou des sel(s) permet notamment d'augmenter le rendement de l'étape (a) de salification. Cette quantité de liant permet l'obtention, à l'issue de l'étape (a), de sels ayant une structure plus homogène.

Ces effets permettent d'une part d'augmenter le rendement total du procédé de synthèse de polyimides, et, d'autre part, d'obtenir des polymères dont la structure est mieux contrôlée. En particulier, les chaînes de polymère sont plus homogènes et la viscosité du polymère est mieux contrôlée.

Ainsi, le procédé selon l'invention permet de contrôler de manière particulièrement efficace la structure et la viscosité des polyimides obtenus.

Un autre avantage du procédé selon l'invention est la faculté d'effectuer la polymérisation proprement dite (étape (b)) à une température relativement faible permettant d'éviter des dégradations thermiques du sel et du polyimide formé.

Selon un mode de réalisation particulièrement avantageux de l'invention, l'étape (b) peut être réalisée en augmentant simplement la température du mélange directement issu de l'étape (a) en ayant préalablement éliminée l'eau produite par la réaction. Ceci permet de réaliser l'ensemble du procédé de manière intégrée, notamment dans un même réacteur, dans un même mélangeur ou dans un même granulateur.

D'autres avantages et caractéristiques de l'invention apparaitront plus clairement à l'examen de la description détaillée ci-après.

On entend par liant tout composé liquide qui permet de mettre en contact le ou les acide(s) tétracarboxylique(s) aromatique(s) avec la ou les diamine(s) et le ou les limiteur(s) de chaînes éventuel(s) et qui ne réagit pas chimiquement avec les composés précédemment décrits.

Avantageusement, le liant permet de dissoudre au moins une partie de l'un des composés parmi l'acide tétracarboxylique aromatique, la diamine et le limiteur de chaînes, de préférence l'un des composés tels que mentionnés ci-avant.

En particulier, le liant permet de dissoudre l'acide tétracarboxylique aromatique ou la diamine ou le limiteur de chaines éventuel.

De manière particulièrement préférée, le liant permet de dissoudre l'acide tétracarboxylique aromatique, la diamine et le limiteur de chaines éventuel.

On entend par liquide organique tout composé organique liquide qui ne réagit pas chimiquement avec le ou les acide(s) tétracarboxylique(s) aromatique(s), la ou les diamine(s) et le ou les limiteur(s) de chaînes éventuel(s).

Ces composés sont liquides à la température de 25°C et à la pression atmosphérique (760 mm Hg).

Le polyimide obtenu par le procédé selon l'invention est thermoplastique et semi-cristallin. De manière préférée, il présente une température de fusion Tf allant de 50 à 350°C.

La détermination de la température de fusion du polyimide est préférentiellement effectuée au pic de l'endotherme de fusion mesurée par calorimétrie différentielle à balayage (DSC « Differential Scanning Calorimetry »), à l'aide d'un appareil Perkin Elmer Pyris 1, en chauffant le polyimide à partir de 20°C à une vitesse de 10°C/min.

On entend par polyimide semi-cristallin, un polyimide présentant une phase amorphe et une phase cristalline, ayant par exemple un taux de cristallinité compris entre 1 et 85%.

Les polyimides obtenus par le procédé selon la présente invention présentent préférentiellement une température de transition vitreuse Tg inférieure ou égale à 200°C, plus préférentiellement inférieure ou égale à 150°C.

On entend par polyimide thermoplastique, un polyimide présentant une température au-delà de laquelle la matière se ramollit et fond et qui, au dessous de celle-ci, devient dure.

La présente invention concerne la fabrication d'un polyimide aromatique à partir d'un ou plusieurs acide(s) tétracarboxylique(s) aromatique(s) et une ou plusieurs diamine(s). Les polymères obtenus à partir d'une seule diamine et d'un seul acide tétracarboxylique sont des polyimides, généralement appelés homopolyimides. La réaction entre au moins 3 monomères différents produit un polyimide, généralement appelé copolyimide, tout particulièrement deux diamines et un acide tétracarboxylique ou une diamine et deux acides tétracarboxyliques. Les polyimides peuvent être définis par la composition molaire en chaque monomère constitutif.

L'étape (a) selon l'invention consiste à préparer un ou plusieurs sel(s) en faisant réagir un ou plusieurs acide(s) tétracarboxylique(s) aromatique(s) à l'état solide et une ou plusieurs diamine(s), optionnellement en présence d'un ou plusieurs limiteur(s) de chaînes.

Selon l'invention, l'étape (a) est réalisée en présence d'un ou plusieurs liant(s), comprenant un ou plusieurs liquide(s) organique(s),en une quantité de 1 à 25% en poids par rapport au poids total du ou des acide(s) tétracarboxylique(s) aromatique(s), de la ou des diamine(s) et du ou des limiteur(s) de chaînes éventuel(s). Le ou les liant(s) sont présents en une quantité allant de 5 à 20% en poids, de préférence de 10 à 20% en poids, par rapport au poids total du ou des acide(s) tétracarboxylique(s) aromatique(s), de la ou des diamine(s) et du ou des limiteur(s) de chaînes éventuel(s).

Selon un mode de réalisation particulier de l'invention, le ou les liant(s) comprennent au moins 50% en poids de liquide(s) organique(s), de préférence au moins 60% en poids de liquide(s) organique(s), de préférence encore 70% en poids de liquide(s) organique(s), et de manière particulièrement préférée 100% en poids de liquide(s) organique(s) par rapport au poids total du liant.

Conformément à ce mode de réalisation, le liant peut être un mélange à base de liquide(s) organique(s) et d'eau dans des teneurs pondérales respectives de (50/50), notamment de (60/40), de préférence de (70/30) et plus préférentiellement de 90/10.

Avantageusement, le ou les liquide(s) organique(s) sont choisis parmi les alcools en C₁-C₄, et préférentiellement en C₁-C₃, les cétones et leurs mélanges. Préférentiellement, le ou les liquide(s) organique(s) sont choisis parmi les alcools en C₁-C₃, notamment l'éthanol.

Selon un mode de réalisation préféré, l'étape (a) est réalisée en présence d'un ou plusieurs liquide(s) organique(s) choisis parmi les alcools en C₁-C₃, notamment l'éthanol, dans une teneur pondérale allant de 1 à 25% en poids par rapport au poids total du ou des acide(s) tétracarboxylique(s) aromatique(s), de la ou des diamine(s) et du ou des limiteur(s) de chaînes éventuel(s).

De manière préférée, le ou les sel(s) sont préparés en faisant réagir le ou les acide(s) tétracarboxylique(s) aromatique(s) et la ou les diamine(s) selon un rapport molaire du ou des acide(s) tétracarboxylique(s) aromatique(s) sur la ou les diamine(s) allant de 0,70 à 1,30, et préférentiellement de 0,95 à 1,05. Cela signifie que le ratio entre la quantité en moles d'acide(s) tétracarboxylique(s) aromatique(s) d'une part et la quantité en moles de diamine(s) d'autre part va de 0,70 à 1,30, et préférentiellement de 0,95 à 1,05.

Le sel ainsi préparé est un sel dans lequel les entités diamines et acides tétracarboxyliques sont liés uniquement par des interactions polaires, en particulier du type -COO⁻ H₃⁺N-, et non par liaison(s) covalente(s). Plus particulièrement, le sel comprend un acide tétracarboxylique aromatique et une diamine, lesquels ne sont pas liés par liaison covalente. En particulier, le sel peut présenter la structure suivante, avec Ar représentant un groupement aromatique :

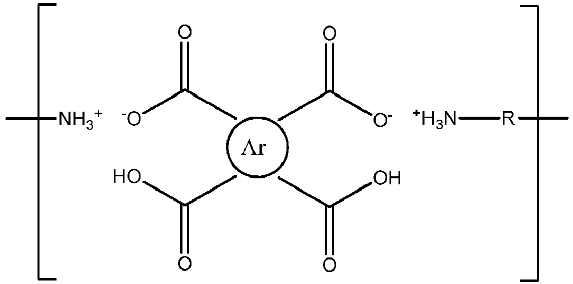

Les acides tétracarboxyliques aromatiques du procédé selon l'invention présentent préférentiellement des fonctions acides carboxyliques dans des positions telles qu'elles permettent généralement de former deux fonctions anhydrides d'acides sur une même molécule par une réaction de déshydratation. Les acides tétracarboxyliques aromatiques de la présente invention présentent généralement deux paires de fonctions acides carboxyliques, chaque paire de fonctions étant liée à un atome de carbone adjacent, en α et β. Les fonctions acides tétracarboxyliques peuvent être obtenues à partir de dianhydrides d'acides par hydrolyse des fonctions anhydrides. Des exemples de dianhydrides d'acides aromatiques et d'acides tétracarboxyliques aromatiques, dérivés des dianhydrides, sont décrits dans le brevet US7932012.

Les acides tétracarboxyliques aromatiques de l'invention peuvent également porter des groupes fonctionnels, notamment le groupe -SO₃X, avec X=H ou un cation, tels que Na, Li, Zn, Ag, Ca, Al, K et Mg.

Avantageusement, les acides tétracarboxyliques aromatiques sont choisis parmi l'acide pyromellitique, l'acide 3,3',4,4'-biphényltétracarboxylique, l'acide 2,3,3',4'-biphényltétracarboxylique, l'acide 2,2',3,3'-biphényltétracarboxylique, l'acide 3,3',4,4'-benzophénonetétracarboxylique, l'acide 2,2',3,3'-benzophénonetétracarboxylique, l'acide 1,2,5,6-naphthalènetétracarboxylique, l'acide 2,3,6,7-naphthalènetétracarboxylique, l'acide 2,3,5,6-pyridinetétracarboxylique, l'acide 3,4,9,10-perylènetétracarboxylique, l'acide 3,3',4,4'-tétraphénylsilanetétracarboxylique, et l'acide 2,2'-bis-(3,4-bicarboxyphenyl)hexafluoropropane tétracarboxylique.

De manière préférée, les diamines de l'invention sont des molécules de formule H₂N-R-NH₂ avec un radical R divalent hydrocarboné aliphatique, saturé ou insaturé, linéaire ou branché, cycloaliphatique ou aromatique, comprenant éventuellement un ou plusieurs hétéroatomes.

Avantageusement, le radical R comprend de 2 à 50 atomes de carbone, préférentiellement de 6 à 36 atomes de carbone. Le radical R peut éventuellement contenir un ou plusieurs hétéroatomes, tel que O, N, P ou S. Le radical R peut comprendre un ou plusieurs groupes fonctionnels comme des fonctions hydroxyles, sulfones, cétones, éthers ou autres.

De préférence, les fonctions amines sont des amines primaires.

Selon un premier mode de réalisation, les diamines de l'invention sont choisies parmi les diamines aliphatiques.

Les diamines peuvent notamment être des diamines en positions α,ω contenant de 15 à 20 groupes méthylènes.

De préférence, les diamines aliphatiques sont choisies parmi le 1,2-diaminoéthane, le 1,3-diaminopropane, le 1,4-diaminobutane, le 1,5-diaminopentane, le 2-méthyl-1,5-diaminopentane, l'hexaméthylène diamine, la 3-méthyl-hexaméthylène diamine, la 2,5-diméthyl-hexaméthylène diamine, la 2,2,4- et 2,4,4-triméthyl-hexaméthylène diamine, le 1,7-diaminoheptane, le 1,8- diaminooctane, la 2,2,7,7-tétraméthyl-octaméthylène diamine, le 1,9- diaminonane, la 5-méthyl-1 ,9-diaminononane, le 1,10-diaminodécane, le 1,11-diaminoundécane, le 1,12-diaminododécane, le 1,13-diaminotridécane et le 1,14- diaminotétradécane.

Selon un mode de réalisation particulier de l'invention, les diamines sont choisies parmi les diamines cycloaliphatiques, et de préférence parmi l'isophorone diamine, le 1,3-diaminocyclohexane, le 1,4-diaminocyclohexane, le diaminodicyclohexyl-méthane, le 1,3-bis(aminométhyle)cyclohexane, la 4,4'-méthylènebis(cyclohexylamine) et la 4,4'-methylènebis(2-methylcyclohexylamine).

On peut également citer des exemples de diamines contenant des hétéroatomes comme les polyétherdiamines telles que les Jeffamine^{®} et Elastamine^{®} commercialisées par Hunstman. Il existe une variété de polyéther, composés de motifs oxyde d'éthylène, oxyde de propylène ou oxyde de tétraméthylène.

Selon un second mode de réalisation, les diamines de l'invention sont choisies parmi les diamines aromatiques.

De préférence, les diamines aromatiques sont des diamines aromatiques comportant de 6 à 24 atomes de carbone, plus préférentiellement de 6 à 18 atomes de carbone et encore plus préférentiellement de 6 à 10 atomes de carbone, comme par exemple la m-xylylènediamine (MXDA).

De préférence, l'aromaticité des diamines aromatiques résulte de la présence des groupements m-phénylène et/ou o-phénylène, selon un nombre total desdits groupements allant de 1 à 2.

Avantageusement, les diamines aromatiques sont choisies parmi la m-phénylènediamine (MPD), la p-phénylènediamine (PPD), le 3,4'-diaminodiphényléther (3,4'-ODA), le 4,4'-diaminodiphényléther (4,4'-ODA), la m-xylylènediamine (MXDA), comme illustrées ci-dessous : 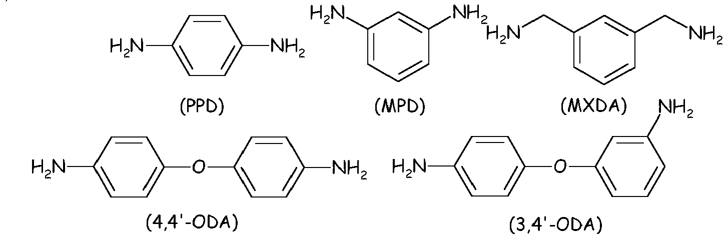 et la p-xylylènediamine (PXDA, non représentée).

Une diamine aromatique particulièrement préférée est la m-xylylènediamine (MXDA).

L'étape (a) peut être réalisée en présence d'un ou plusieurs limiteur(s) de chaînes, qui sont des composés permettant de contrôler les longueurs de chaîne du polyimide lors de la polymérisation du sel (étape (b)).

De manière préférée, le ou les limiteur(s) de chaînes sont des composés (C) différents du ou des acide(s) tétracarboxylique(s) aromatique(s) et de la ou des diamine(s), et qui comprennent un ou plusieurs groupement(s) choisi(s) parmi un groupement amine, un groupement acide carboxylique, un groupement anhydride, un groupement ester et un groupement chlorure d'acyle.

Selon un mode de réalisation de l'invention, le ou les composé(s) (C) sont choisis parmi les monoamines, les monoanhydrides, les monoacides, les diacides et les dianhydrides aromatiques.

Les monoacides incluent notamment les monoesters acides tels qu'obtenus en faisant réagir un alcool et un anhydride. Les diacides incluent notamment les diesters diacides aromatiques tels qu'obtenus en faisant réagir un alcool et un dianhydride aromatique.

De préférence, les composés (C) sont choisis parmi le 1-aminopentane, le 1-aminohexane, le 1-aminoheptane, le 1-aminooctane, le 1-aminononane, le 1-aminodécane, le 1-aminoundécane, le 1-aminododécane, la benzylamine, l'anhydride phtalique, l'anhydride pyromellitique, l'anhydride trimellitique, l'acide 1,2-benzènedicarboxylique, l'acide acétique, l'acide propionique, l'acide benzoïque, l'acide stéarique, l'acide mellitique, l'acide trimellitique, l'acide phtalique, l'acide hexane-1-oique, l'acide 1,2,3,4,5-benzènepentacarboxylique, le chlorure d'anhydride trimellitique et ses dérivés acides, esters et diesters, le chlorure de benzoyle, le chlorure de toluoyle, le chlorure de naphtoyle, le pyromellitate de tetraméthyle, le pyromellitate de tétraéthyle, le 1,2,4-pyromellitate de triméthyle, le 1,2,5-pyromellitate de triméthyle, le 1,2-pyromellitate de diéthyle, le 1,4-pyromellitate de diéthyle, le 1,5-pyromellitate de diéthyle, le 1,2-pyromellitate de diméthyle, le 1,4-pyromellitate de diméthyle, le 1,5-pyromellitate de diméthyle, le pyromellitate de méthyle, le pyromellitate d'éthyle, le trimellitate de triméthyle, le trimellitate de triéthyle, le 1,3-triméllitate de diméthyle, le 1,4-triméllitate de diméthyle, le 1,3-trimellitate de diéthyle, le 1,4-trimellitate de diéthyle, le 3,4-trimellitate de diéthyle, le trimellitate de méthyle, le trimellitate d'éthyle, l'acide isophtalique, l'acide téréphtalique, l'acide succinique, l'acide glutarique, l'acide adipique, l'acide sébacique, l'acide dodécane-1,12-dioïque et leurs mélanges.

Un composé (C) particulièrement préféré est le 1-aminohexane.

La quantité de composé (C) éventuel introduit est avantageusement supérieure à 0,5% en nombre de moles par rapport au nombre total de moles d'acide tétracarboxylique aromatique et de diamine. De préférence, la quantité en composé (C) éventuel introduit va de 0,5 à 10% en nombre de moles, plus préférentiellement de 1 à 5% en nombre de moles, par rapport au nombre total de moles de d'acide tétracarboxylique aromatique et de diamine.

Lors de l'étape (a), le ou les liant(s) peuvent notamment être introduits soit avec la ou les diamine(s) et/ou avec le ou les limiteur(s) de chaînes, soit indépendamment de la ou des diamine(s) et/ou du ou des limiteur(s) de chaînes éventuel(s).

On peut par exemple procéder en ajoutant à(aux) acide(s) tétracarboxylique(s) aromatique(s) à l'état solide, la ou les diamine(s) et/ou le ou les limiteur(s) de chaînes éventuel(s) sous forme d'une solution ou d'une dispersion de ceux-ci dans le ou les liant(s).

On peut procéder par exemple par pulvérisation, sur l'acide tétracarboxylique aromatique à l'état solide, d'une solution ou d'une dispersion de la ou des diamine(s) et/ou du ou des limiteur(s) de chaîne.

Le ou les liant(s) peuvent également être ajoutés à(aux) acide(s) tétracarboxylique(s) aromatique(s) à l'état solide, avant l'ajout de la ou des diamine(s) et/ou du ou des limiteur(s) de chaînes éventuel(s).

On peut ainsi procéder par pulvérisation du ou des liant(s) sur le ou les acide(s) tétracarboxylique(s) aromatique(s), ou sur le mélange du ou des acide(s) tétracarboxylique(s) aromatique(s) avec le ou les diamine(s), en présence ou non du ou des limiteur(s) de chaîne.

A titre d'exemple, on ajoute de l'éthanol sur l'acide tétracarboxylique aromatique qui se trouve à l'état solide. Puis, on additionne par pulvérisation la diamine à l'état liquide et on ajoute un limiteur de chaînes. Le sel obtenu précipite.

Dans tous les cas possibles tels que mentionnés ci-avant, le mélange réactionnel est maintenu sous agitation.

Au cours de l'étape (a), la température du milieu réactionnel est préférentiellement maintenue à une température inférieure à 150°C.

A la fin de cette synthèse, le sel issu de l'étape (a) peut être séché, par exemple par séchage sous pression atmosphérique ou par séchage sous vide, de telle sorte qu'une poudre sèche est obtenue. Toutefois, il n'est pas indispensable de sécher le sel issu de l'étape (a), et ce dernier peut être directement soumis à l'étape (b) comme exposé ci-après. Cela constitue un avantage supplémentaire du procédé selon l'invention.

La réalisation de l'étape (a), telle que décrite ci-avant, permet d'obtenir un très bon rendement pour la réaction de salification proprement dite.

Le rendement de la salification peut être déterminé par analyse thermogravimètrique (ATG) en déterminant la quantité de monomères libres, c'est-à-dire qui n'ont pas réagi pour former le sel.

Les rendements obtenus sont notamment de l'ordre de 80% en poids, et préférentiellement supérieurs ou égaux à 95% en poids.

En outre, les sels obtenus sont de structure « équilibrée », c'est-à-dire que la quantité molaire du ou des acide(s) tétracarboxylique(s) aromatique(s) par rapport à la quantité molaire de la ou des diamine(s) dans le sel formé à l'étape (a) est avantageusement de 0,70 à 1,30, et préférentiellement de 0,95 à 1,05. Le ratio molaire est déterminé par potentiométrie. Ceci permet d'améliorer la structure et l'homogénéité des polyimides obtenus à l'issue de l'étape (b).

Dans le cadre de la présente invention, on peut en outre utiliser des catalyseurs, ajoutés à n'importe quel moment du procédé, tel que par exemple en mélange avec la diamine et/ou le limiteur de chaîne éventuel, soit seuls, soit en mélange au sel formé.

Lors de l'étape (b) du procédé selon l'invention, une polymérisation du ou des sel(s) obtenu(s) à l'étape (a) est effectuée pour obtenir le polyimide.

De préférence, la polymérisation est réalisée à l'état solide, à l'état fondu, ou en milieu liquide, de manière particulièrement préférée, à l'état solide.

Le terme « polymérisation à l'état solide » est bien connu de l'homme du métier, et désigne une réaction de polymérisation dans laquelle le milieu réactionnel reste à l'état solide.

La polymérisation à l'état solide permet en particulier d'éviter l'utilisation de solvants, pouvant être néfastes pour l'environnement.

De manière préférée, l'étape (b) est effectuée par polymérisation à l'état solide, en portant le mélange directement issu de l'étape (a) à une température supérieure ou égale à 150°C, et de préférence allant de 150 à 250°C.

Selon un mode de réalisation préféré de l'invention, la polymérisation est effectuée à une température T obéissant à la relation suivante : Tf du sel > T > Tg du polyimide à obtenir.

La Tf du sel obtenu à l'étape (a) désigne la température de fusion dudit sel.

La détermination de la température de fusion du sel est préférentiellement effectuée par la mesure de la température de fin de l'endotherme mesurée par calorimétrie différentielle à balayage (DSC « Differential Scanning Calorimetry »), à l'aide d'un appareil Perkin Elmer Pyris 1, en chauffant le sel à partir de 20°C à une vitesse de 10°C/min.

Avantageusement, la polymérisation est effectuée à une pression absolue allant de 0,005 à 1 MPa, et plus préférentiellement allant de 0,005 MPa à 0,2 MPa.

Le procédé de polymérisation à l'état solide peut être réalisé selon les procédés classiques connus de l'homme du métier. Le principe fondamental de ces procédés consiste à porter le sel obtenu à l'étape (a) en présence du ou des composé(s) (C) éventuel(s) sous air ou dans une atmosphère inerte ou sous vide, à une température inférieure au point de fusion du sel mais suffisante pour permettre la réaction de polymérisation, généralement supérieure à la température de transition vitreuse du polyimide. Un tel procédé peut donc comprendre brièvement :
(a) un chauffage du produit par diffusion conductive, convective ou par radiation ;
(b) un inertage par application de vide, balayage par un gaz neutre tel que l'azote, le CO₂, ou la vapeur surchauffée, ou application d'une surpression ;
(c) une élimination du sous-produit de condensation par évaporation puis, balayage du gaz vecteur ou concentration de la phase gaz ;
(d) une agitation mécanique ou fluidisation de la phase solide par le gaz vecteur ou vibrations peut être souhaitable afin d'améliorer les transferts thermiques et massiques et également prévenir tout risque d'agglomération du solide divisé.

Préférentiellement, on utilise au cours de l'étape (b) un moyen de maintien en mouvement du polyimide afin d'obtenir celui-ci sous forme de particules, et de prévenir une agrégation de ces particules. On peut utiliser pour ce faire une agitation mécanique, tel qu'un agitateur, une mise en rotation du réacteur, ou une agitation par vibrations, ou une fluidification par un gaz vecteur.

Les polyimides obtenus par le procédé selon l'invention se présentent avantageusement sous forme de particules, dont le diamètre médian D50 va de 0,01 à 2 mm.

On entend par diamètre médian D50, la médiane qui sépare en deux parties d'aires égales la courbe de répartition granulométrique en volume. Les analyses granulométriques peuvent être effectuées au moyen d'un granulomètre à diffraction laser Mastersizer X à banc optique étendu de la Société Malvern Instruments SA permettant de caractériser des tailles de particules comprises entre 2 et 2000 µm. La distribution étant volumique, le diamètre médian correspondra à 50% du volume total des particules. De plus, le diamètre médian donné, correspond au diamètre d'une sphère équivalente, en supposant que tous les objets ont une forme équivalente à une sphère.

De manière préférée, les polyimides obtenus par le procédé selon l'invention sont blancs. Ils présentent notamment une caractéristique colorimétrique CIE b^{∗} inférieure ou égale à 10.

De préférence, la masse molaire moyenne en nombre Mₙ des polyimides selon l'invention va de 500 à 50000 g/mol, plus préférentiellement, de 2000 à 40000 g/mol, encore plus préférentiellement, de 5000 à 30000 g/mol.

Les masses molaires spécifiques dans la présente invention peuvent être déterminées selon de nombreuses méthodes qui sont bien connues en soi de l'homme de l'art.

A titre illustratif de ces méthodes peuvent être citées notamment celle se fondant sur une analyse des groupes terminaux, par exemple détermination par RMN ou titration, ou celle faisant appel à une mesure de chromatographie sur gel perméable (Gel Permeation Chromatography GPC) appelée également chromatographie d'exclusion stérique (SEC). D'une manière générale, le choix du solvant pour réaliser les mesures GPC d'un polyimide se fait d'une manière bien connue en soi en fonction de la structure du polyimide.

De manière préférentielle, pour déterminer les concentrations en groupements terminaux, les mesures RMN d'un polyimide peuvent être réalisées dans l'acide sulfurique deutéré concentré comme solvant.

Le calcul de la distribution de masses ainsi que de la masse moyenne Mn peut être effectué en équivalents polystyrène (PST) ou masse absolue, après calibration par des étalons commerciaux. Si nécessaire, des mesures en masses absolues peuvent être réalisées, par détection viscosimétrique. Dans le cadre de la présente invention, la masse molaire moyenne Mn est exprimée en masse absolue. La masse molaire moyenne Mn peut être calculée à partir de la totalité de la distribution ou après troncature des faibles masses si on ne souhaite pas prendre en compte la contribution des oligomères cycliques.

A la fin de l'étape (b), le polyimide synthétisé par le procédé selon l'invention est récupéré, de préférence sous forme de particules, et peut notamment l'être sans qu'un broyage mécanique supplémentaire ne soit nécessaire. En revanche, il peut être utile de procéder à une désagrégation de particules qui peuvent être agglomérées.

On peut utiliser le polyimide obtenu par le procédé selon l'invention pour préparer des compositions qui sont généralement obtenues par mélange du polyimide avec différents composés, notamment des charges et/ou des additifs. On procède à plus ou moins haute température, à plus ou moins haute force de cisaillement selon la nature des différents composés. Les composés peuvent être introduits simultanément ou successivement. On utilise généralement un dispositif d'extrusion dans lequel la matière est chauffée, puis fondue et soumise à une force de cisaillement, et véhiculée. On peut, selon des modes de réalisations particuliers, effectuer des pré-mélanges, en fondu ou non, avant préparation de la composition finale. On peut par exemple effectuer un prémélange dans une résine, par exemple du polyimide, de façon à réaliser un mélange maître.

On peut obtenir une composition par mélange, en fondu ou non, des polyimides obtenus par le procédé de fabrication tel que décrit précédemment, avec des charges de renfort ou de remplissage et/ou des agents modificateurs du choc et/ou des additifs.

Ladite composition peut éventuellement comprendre un ou plusieurs autres polymères.

Ladite composition peut comprendre entre 20 et 90 % en poids, préférentiellement entre 20 et 70 % en poids, et plus préférentiellement entre 35 et 65% en poids de polyimide selon l'invention, par rapport au poids total de la composition.

Ladite composition peut en outre comprendre des charges de renfort ou de remplissage. Les charges de renfort ou de remplissage sont des charges classiquement utilisées pour la réalisation de compositions thermoplastiques, notamment à base de polyamide. On peut notamment citer les charges fibreuses de renfort, telles que des fibres de verre, des fibres de carbone, ou des fibres organiques, les charges non fibreuses, telles que des charges particulaires, lamellaires et/ou les nanocharges exfoliables ou non exfoliables comme l'alumine, le noir de carbone, les argiles, le phosphate de zirconium, le kaolin, le carbonate de calcium, le cuivre, les diatomées, le graphite, le mica, la silice, le dioxyde de titane, les zéolites, le talc, la wollastonite, les charges polymériques telles que, par exemple, des particules de diméthacrylates, les billes de verre ou de la poudre de verre. On préfère notamment utiliser les fibres de renfort, telles que les fibres de verre.

Ladite composition peut comprendre entre 5 et 60 % en poids de charges de renfort ou de remplissage, préférentiellement entre 10 et 40 % en poids, par rapport au poids total de la composition.

Ladite composition, comprenant le polyimide obtenu par le procédé selon l'invention tel que défini précédemment, peut comprendre au moins un agent modificateur du choc, c'est-à- dire un composé capable de modifier la résistance aux chocs d'une composition polyimide. Ces composés modificateurs du choc comprennent préférentiellement des groupements fonctionnels réactifs avec le polyimide. On entend par groupements fonctionnels réactifs avec le polyimide, des groupements capables de réagir ou d'interagir chimiquement avec les fonctions résiduelles anhydride, acide ou amine du polyimide, notamment par covalence, interaction ionique ou hydrogène ou liaison de van der Waals. De tels groupements réactifs permettent d'assurer une bonne dispersion des agents modificateurs de chocs dans la matrice polyimide. On peut citer par exemple les fonctions anhydrides, époxydes, esters, aminés, acides carboxyliques, les dérivés carboxylates ou sulfonates.

Ladite composition peut en outre comprendre des additifs généralement utilisés pour la fabrication de compositions polyimides ou polyamides. Ainsi, on peut citer les lubrifiants, les agents ignifugeants, les plastifiants, les agents nucléants, les agents anti-UV, les catalyseurs, les antioxydants, les antistatiques, les colorants, les matifiants, les additifs d'aide au moulage ou autres additifs conventionnels.

Les charges, agents de renfort de chocs et/ou additifs peuvent être ajoutés au polyimide par des moyens usuels adaptés biens connus dans le domaine des plastiques techniques, tel que par exemple lors de la salification, ou lors de la polymérisation.

Les compositions polyimides sont généralement obtenues par mélange des différents composés entrant dans la composition à froid ou en fondu. On procède à plus ou moins haute température, à plus ou moins haute force de cisaillement selon la nature des différents composés. Les composés peuvent être introduits simultanément ou successivement. On utilise généralement un dispositif d'extrusion dans lequel la matière est chauffée, puis fondue et soumise à une force de cisaillement, et véhiculée.

On peut mélanger tous les composés en phase fondue au cours d'une unique opération, par exemple au cours d'une opération d'extrusion. On peut par exemple procéder à un mélange de granulés ou de poudres des matériaux polymériques, les introduire dans le dispositif d'extrusion afin de les fondre et de les soumettre à un cisaillement plus ou moins important. On peut, selon des modes de réalisations particuliers, effectuer des pré-mélanges, en fondu ou non, de certains des composés avant préparation de la composition finale.

Le polyimide ou les diverses compositions tels que définis précédemment peuvent être utilisés pour tout procédé de mise en forme de fabrication d'articles plastiques.

Des articles plastiques comprenant le polyimide tel que fabriqué par le procédé selon l'invention peuvent être fabriqués. On peut citer à cet effet diverses techniques telles que le procédé de moulage, notamment le moulage par injection, l'extrusion, l'extrusion soufflage, ou encore le rotomoulage, notamment dans le domaine de l'automobile ou de l'électronique et de l'électricité par exemple. Le procédé d'extrusion peut notamment être un procédé de filage ou de fabrication de films.

Grâce à sa fluidité particulièrement bonne, le polyimide obtenu par le procédé selon l'invention est tout particulièrement adapté à des mises en forme impliquant une injection ou une extrusion en fondu.

Des articles de type étoffe imprégnées ou articles composites à fibres continues peuvent être fabriqués. Ces articles peuvent notamment être fabriqués par mise en présence d'une étoffe et des particules de polyimide obtenu par le procédé selon l'invention à l'état solide ou fondu. Les étoffes sont des surfaces textiles obtenues par assemblage de fils ou de fibres solidarisés par un procédé quelconque, tel que notamment collage, feutrage, tressage, tissage, tricotage. Ces étoffes sont aussi désignées comme des réseaux fibreux ou filamenteux, par exemple à base de fibres de verre, de fibres de carbone ou autres. Leur structure peut être aléatoire, unidirectionnelle (1 D), ou multidirectionnelle (2D, 2,5D, 3D ou autre).

Les polyimides obtenus par le procédé selon l'invention peuvent également être utilisés sous forme de particules dans des procédés de fabrication d'articles par fusion sélective de couches de poudre de polymères, notamment le prototypage rapide par frittage en phase solide à l'aide d'un laser. La fabrication par fusion sélective de couches est un procédé de fabrication d'articles consistant à déposer des couches de matériaux sous forme de poudre, à fondre de manière sélective une partie ou un domaine d'une couche, et de venir déposer une nouvelle couche de poudre et de fondre de nouveau une partie de cette couche et ainsi de suite de manière à obtenir l'objet désiré. La sélectivité de la partie de la couche à fondre est obtenue par exemple grâce à l'utilisation d'absorbeurs, d'inhibiteurs, de masques, ou à travers l'apport d'énergie focalisée, comme par exemple un rayonnement électromagnétique tel qu'un rayon laser. On préfère notamment le frittage par additivation de couches, particulièrement le prototypage rapide par frittage à l'aide d'un laser.

Le terme et/ou inclut les significations et, ou, ainsi que toutes les autres combinaisons possibles des éléments connectés à ce terme.

D'autres détails ou avantages de l'invention apparaîtront plus clairement au vu des exemples donnés ci-dessous uniquement à titre indicatif.

### Exemples

### Protocoles de mesures

Des analyses de Thermogravimétrie (ATG) sont réalisées pour déterminer le taux de conversion des monomères lors de la préparation des sels. L'appareil utilisé est le Perkin Elmer TGA-7. Les échantillons de sels sont chauffés de 30°C à 800°C à une vitesse de 10°C par minute et la perte de masse enregistrée. La perte de masse détectée entre 160°C et 300°C correspond à la perte d'eau générée par la réaction de polycondensation. Le rapport entre celle-ci et la perte de masse maximale théorique qui serait observé en cas de conversion complète permet d'évaluer la conversion du sel et donc la quantité de monomères n'ayant pas réagi.

Le ratio molaire du sel sec est déterminé par dosage pH-métrique à l'aide d'un appareil Mettler Toledo T50. Le dosage est réalisé sur un volume de 40 mL d'eau contenant environ 0,5 g de sel sec auquel est ajouté 10 mL de soude à une concentration de 1 mol/L. La solution titrante utilisée est une solution d'acide chlorhydrique à 1 mol/L. Le dosage du résidu de soude caractérisé par le premier volume équivalent (V1) permet d'accéder à la quantité d'acide pyromellitique (PMA) par un dosage en retour. La différence des volumes équivalents (V2-V1) permet de mesurer la quantité de 2-méthyl-1,5-diaminopentane par dosage direct. Le dosage est réalisé sur trois prises d'échantillon. Le ratio molaire du sel est ainsi défini par le rapport molaire entre le nombre de moles de tétra-acide et le nombre de moles de diamine.

Des analyses de calorimétrie différentielle à balayage (DSC « Differential Scanning Calorimetry ») sont réalisées pour déterminer la température de fusion et de cristallisation des polyimides synthétisés. L'appareil utilisé est le Perkin Elmer Pyris 1. Les échantillons sont soumis à une première montée en température de 20°C à 380°C, température inférieure à la température de dégradation du polyimide, puis à un refroidissement à 20°C et enfin à une seconde montée jusqu'à 380°C à une vitesse de 10°C/min. Les phénomènes endothermiques et exothermiques sont enregistrés durant ces séquences. Les températures de fusion et de cristallisation sont déterminées au sommet des pics caractéristiques respectifs.

### Exemple 1 (selon l'invention) : Préparation d'un sel MPMD/PMA par pulvérisation d'une solution liquide de diamine sur le tétra-acide solide avec 10% d'éthanol en tant que liant

25.02 g (0.1 moles) d'acide pyromellitique (PMA) sont placés dans un réacteur de type tambour rotatif de 500 ml agité par un mouvement de rotation suivant un axe de pente supérieur à 20° par rapport à l'axe horizontal. Le réacteur est équipé de contre-pales afin d'améliorer le mélange par contraintes mécaniques. Une solution éthanolique de 2-méthyl-1,5-diaminopentane (MPMD) est préparée en mélangeant 11.46 g (0.1 moles) de la diamine avec 4.06 g d'éthanol (Hexalab, pureté >99.8%) pour atteindre un titre massique de 26%. Ainsi, lorsque la totalité de la solution de diamine est injectée sur l'acide, le titre massique en éthanol s'élève à 10% dans le mélange réactionnel.

La solution 2-méthyl-1,5-diaminopentane/éthanol est ajoutée au milieu réactionnel à l'aide d'une pompe doseuse volumétrique pendant 3 h. La quantité de liquide injectée est suivie par pesée massique de la solution d'alimentation. La solution diamine/éthanol liquide est introduite sur le tétra-acide solide sous la forme d'un spray réalisé à l'aide d'une buse d'injection à cône plat positionnée à l'intérieur du réacteur. Pendant toute l'injection le réacteur est maintenu à une température de 30°C, sous une agitation de 30 rotations par minute et sous atmosphère inerte par balayage d'un flux d'azote.

Après séchage sous vide à 300 mbar à une température de 70°C pendant 2 heures, le sel formé se présente sous la forme d'une poudre blanche de granulométrie homogène.

Le taux de conversion est évalué par analyse thermogravimétrique. Ainsi, le sel synthétisé est chauffé jusqu'à 800°C avec une vitesse de chauffage de 10°C/min. La perte de masse enregistrée par TGA entre 160°C et 300°C et associée à la perte d'eau issue de la réaction de polycondensation est de 18.9%m, ce qui correspond à un taux de conversion du sel en polyimide supérieur à 95%.

Le sel synthétisé présente un ratio molaire équilibré de 1.04.

### Exemple 2 (comparatif) : Préparation d'un sel MPMD/PMA par pulvérisation d'une solution liquide de diamine sur le tétra-acide solide en l'absence de liant

25.02 g (0.1 moles) d'acide pyromellitique (PMA) sont placés dans un réacteur de type tambour rotatif de 500 ml agité par un mouvement de rotation suivant un axe de pente supérieur à 20° par rapport à l'axe horizontal. Le réacteur est équipé de contre-pales afin d'améliorer le mélange par contraintes mécaniques. 11.47 g (0.1 moles) de 2-méthyl-1,5-diaminopentane liquide (MPMD) sont ajoutés au milieu réactionnel à l'aide d'une pompe doseuse volumétrique pendant 2h30. La quantité de diamine injectée est suivie par pesée massique de la solution. La diamine liquide est introduite sur le tétra-acide solide sous la forme d'un spray réalisé à l'aide d'une buse d'injection à cône plat positionnée à l'intérieur du réacteur. Pendant toute l'injection le réacteur est maintenu à une température de 30°C, sous une agitation de 30 rotations par minute et sous une atmosphère inerte par balayage d'un flux d'azote.

Après séchage sous vide à 300 mbar à la température de 70°C pendant 2 heures, le sel formé se présente sous la forme d'une poudre blanche présentant des agglomérats.

Afin d'évaluer la conversion, le sel synthétisé est chauffé jusqu'à 800°C avec une vitesse de chauffage de 10°C/min. La perte de masse enregistrée par TGA entre 160°C et 300°C et associée à la perte d'eau issue de la réaction de polycondensation est alors de 22.6%m, valeur qui est supérieure à la valeur de la perte maximale théorique qui est de 19.4%m. L'écart s'explique car cette perte de masse correspond à l'évaporation de l'eau provenant de la réaction de polycondensation à laquelle il faut ajouter la sublimation du tétra-acide en excès qui n'a pas été éliminé lors du séchage.

Le sel synthétisé présente un ratio molaire de 1.2 qui confirme l'excès de tétra-acide.

Au final le taux de conversion du sel en polyimide est inférieur à 85% dans ces conditions.

### Exemple 3 (selon l'invention) : Préparation du polyimide PI MPMD/PMA en phase solide à 210°C

1.64 g du sel MPMD/PMA préparé dans l'exemple 1 sont portés à une température de 210°C dans un tube pourvu d'une agitation mécanique et maintenu sous atmosphère contrôlée d'azote toute la durée de la réaction. Après 4 heures de réaction, un polyimide sous forme de bloc solide est obtenu.

Une température de fusion à 339°C ainsi qu'une température de cristallisation à 273°C sont observées lors de l'évaluation des propriétés thermiques du polyimide par DSC.

### Exemple 4 (comparatif) : Préparation du polyimide PI MPMD/PMA en phase solide à 210°C

1.53 g du sel MPMD/PMA préparé dans l'exemple 2 sont portés à une température de 210°C dans un tube pourvu d'une agitation mécanique et maintenu sous atmosphère contrôlée d'azote toute la durée de la réaction. Après 5 heures de réaction, un polyimide sous forme de bloc solide est obtenu.

Une température de fusion à 329°C ainsi qu'une température de cristallisation à 224°C sont observées lors de l'évaluation des propriétés thermiques du polyimide par DSC

## Revendications

1. Procédé de fabrication d'un polyimide aromatique, **caractérisé en ce qu'**il comprend les étapes suivantes :
(a) préparation d'un ou plusieurs sel(s) en faisant réagir un ou plusieurs acide(s) tétracarboxylique(s) aromatique(s) à l'état solide et une ou plusieurs diamine(s), optionnellement en présence d'un ou plusieurs limiteur(s) de chaînes, en présence d'un ou plusieurs liant(s), comprenant un ou plusieurs liquide(s) organique(s), en une quantité de 1 à 25% en poids par rapport au poids total du ou des acide(s) tétracarboxylique(s) aromatique(s), de la ou des diamine(s) et du ou des limiteur(s) de chaînes éventuel(s), puis ;
(b) polymérisation du ou des sel(s) obtenus à l'étape (a), **caractérisé en ce que** le ou les liants(s) sont présents en une quantité allant de 5 à 20% en poids, de préférence de 10 à 20% en poids, par rapport au poids total du ou des acide(s) tétracarboxylique(s) aromatique(s), de la ou des diamine(s) et du ou des limiteur(s) de chaînes éventuel(s).

2. Procédé selon la revendication 1, **caractérisé en ce que** le ou les liquide(s) organique(s) sont choisis parmi les alcools en C₁-C₄, et préférentiellement en C₁-C₃, les cétones et leurs mélanges.

3. Procédé selon l'une des revendications 1 ou 2, **caractérisé en ce que**, lors de l'étape (a), le ou les liant(s) sont introduits soit avec la ou les diamine(s) et/ou avec le ou les limiteur(s) de chaînes, soit indépendamment de la ou des diamine(s) et/ou du ou des limiteur(s) de chaînes.

4. Procédé selon l'une des revendications précédentes, **caractérisé en ce que** la polymérisation est réalisée lors de l'étape (b) à l'état solide, à l'état fondu, ou en milieu liquide.

5. Procédé selon l'une des revendications précédentes, **caractérisé en ce que** le ou les sel(s) sont préparés en faisant réagir le ou les acide(s) tétracarboxylique(s) aromatique(s) et la ou les diamine(s) selon un rapport molaire du ou des acide(s) tétracarboxylique(s) aromatique(s) sur la ou les diamine(s) allant de 0,70 à 1,30, et préférentiellement de 0,95 à 1,05.

6. Procédé selon l'une des revendications précédentes, **caractérisé en ce que** le ou lesdits acide(s) tétracarboxylique(s) aromatique(s) sont choisis parmi l'acide pyromellitique, l'acide 3,3',4,4'-biphényltétracarboxylique, l'acide 2,3,3',4'-biphényltétracarboxylique, l'acide 2,2',3,3'-biphényltétracarboxylique, l'acide 3,3',4,4'-benzophénonetétracarboxylique, l'acide 2,2',3,3'-benzophénonetétracarboxylique, l'acide 1,2,5,6-naphthalènetétracarboxylique, l'acide 2,3,6,7-naphthalènetétracarboxylique, l'acide 2,3,5,6-pyridinetétracarboxylique, l'acide 3,4,9, 10-perylènetétracarboxylique, l'acide 3,3',4,4'-tétraphénylsilanetétracarboxylique, et l'acide 2,2'-bis-(3,4-bicarboxyphenyl) hexafluoropropane tétracarboxylique.

7. Procédé selon l'une des revendications précédentes, **caractérisé en ce que** la ou les diamine(s) sont des molécules de formule H₂N-R-NH₂ avec un radical R divalent hydrocarboné aliphatique, saturé ou insaturé, linéaire ou branché, cycloaliphatique ou aromatique, comprenant éventuellement un ou plusieurs hétéroatomes.

8. Procédé selon la revendication 7, **caractérisé en ce que** le radical R comprend de 2 à 50 atomes de carbone, et éventuellement un ou plusieurs hétéroatomes.

9. Procédé selon l'une des revendications précédentes, **caractérisé en ce que** la ou les diamine(s) sont choisies parmi les diamines aliphatique(s), et de préférence parmi le 1,2-diaminoéthane, le 1,3-diaminopropane, le 1,4-diaminobutane, le 1,5-diaminopentane, le 2-méthyl-1,5-diaminopentane, l'hexaméthylène diamine, la 3-méthyl-hexaméthylène diamine, la 2,5-diméthyl-hexaméthylène diamine, la 2,2,4- et 2,4,4-triméthyl-hexaméthylène diamine, le 1,7-diaminoheptane, le 1,8-diaminooctane, la 2,2,7,7-tétraméthyl-octaméthylène diamine, le 1,9-diaminonane, la 5-méthyl-1,9-diaminononane, le 1,10-diaminodécane, le 1,11-diaminoundécane, le 1,12-diaminododécane, le 1,13-diaminotridécane, et le 1,14-diaminotétradécane.

10. Procédé selon l'une des revendications 1 à 8, **caractérisé en ce que** la ou les diamine(s) sont choisies parmi les diamines cycloaliphatiques, et de préférence parmi l'isophorone diamine, le 1,3-diaminocyclohexane, le 1,4-diaminocyclohexane, le diaminodicyclohexyl-méthane, le 1,3-bis(aminométhyle)cyclohexane, la 4,4'-méthylènebis(cyclohexylamine) et la 4,4'-methylènebis(2-methylcyclohexylamine).

11. Procédé selon l'une des revendications 1 à 8, **caractérisé en ce que** la ou les diamine(s) sont choisies parmi les diamines aromatiques, et de préférence parmi la m-phénylènediamine, la p-phénylènediamine, le 3,4'-diaminodiphényléther, le 4,4'-diaminodiphényléther, la m-xylylènediamine et la p-xylylènediamine.

12. Procédé selon l'une des revendications précédentes, **caractérisé en ce que** le ou lesdits limiteur(s) de chaînes sont des composés (C) comprenant un ou plusieurs groupement(s) choisi(s) parmi un groupement amine, un groupement acide carboxylique, un groupement anhydride, un groupement ester et un groupement chlorure d'acyle.

13. Procédé selon l'une des revendications précédentes, **caractérisé en ce que** l'étape (b) est effectuée par polymérisation à l'état solide, en portant le mélange directement issu de l'étape (a) à une température supérieure ou égale à 150°C, et de préférence allant de 150 à 250°C, et **en ce que**, lors de l'étape (b), la polymérisation est effectuée à une pression absolue allant de 0,005 à 1 MPa.

## Patentansprüche

1. Verfahren zur Herstellung eines aromatischen Polyimids, **dadurch gekennzeichnet, dass** es die folgenden Schritte umfasst:
(a) Herstellung von einem oder mehreren festen Salzen durch Umsetzen von einer oder mehreren aromatischen Tetracarbonsäuren in festem Zustand und einem oder mehreren Diaminen, gegebenenfalls in Gegenwart eines oder mehrerer Kettenabbruchmittel, in Gegenwart eines oder mehrerer Bindemittel, umfassend eine oder mehrere organische Flüssigkeiten in einer Menge von 1 bis 25 Gew.-%, bezogen auf die Gesamtmenge der aromatischen Tetracarbonsäure bzw. der aromatischen Tetracarbonsäuren, des Diamins bzw. der Diamine und des fakultativen Kettenabbruchmittels bzw. der fakultativen Kettenabbruchmittel, dann
(b) Polymerisation des in Schritt (a) erhaltenen Salzes bzw. der in Schritt (a) erhaltenen Salze, **dadurch gekennzeichnet, dass** das Bindemittel bzw. die Bindemittel in einer Menge im Bereich von 5 bis 20 Gew.-%, vorzugsweise von 10 bis 20 Gew.-%, bezogen auf die Gesamtmenge der aromatischen Tetracarbonsäure bzw. der aromatischen Tetracarbonsäuren, des Diamins bzw. der Diamine und des fakultativen Kettenabbruchmittels bzw. der fakultativen Kettenabbruchmittel, vorliegt bzw. vorliegen.

2. Verfahren nach Anspruch 1, **dadurch gekennzeichnet, dass** man die organische Flüssigkeit bzw. die organischen Flüssigkeiten aus C₁-C₄- und vorzugsweise C₁-C₃-Alkoholen, Ketonen und Mischungen davon auswählt.

3. Verfahren nach Anspruch 1 oder 2, **dadurch gekennzeichnet, dass** man in Schritt (a) das Bindemittel bzw. die Bindemittel mit dem Diamin bzw. den Diaminen und/oder mit dem Kettenabbruchmittel bzw. den Kettenabbruchmitteln oder unabhängig von dem Diamin bzw. den Diaminen und/oder dem Kettenabbruchmittel bzw. den Kettenabbruchmitteln einträgt.

4. Verfahren nach einem der vorhergehenden Ansprüche, **dadurch gekennzeichnet, dass** man die Polymerisation in Schritt (b) in festem Zustand, in geschmolzenem Zustand oder in einem flüssigen Medium durchführt.

5. Verfahren nach einem der vorhergehenden Ansprüche, **dadurch gekennzeichnet, dass** man das Salz bzw. die Salze durch Umsetzen der aromatischen Tetracarbonsäure bzw. der aromatischen Tetracarbonsäuren und des Diamins bzw. der Diamine in einem Molverhältnis von aromatischer Tetracarbonsäure bzw. aromatischen Tetracarbonsäuren zu Diamin bzw. Diaminen im Bereich von 0,70 bis 1,30 und vorzugsweise von 0,95 bis 1,05 herstellt.

6. Verfahren nach einem der vorhergehenden Ansprüche, **dadurch gekennzeichnet, dass** man die aromatische Tetracarbonsäure bzw. die aromatischen Tetracarbonsäuren aus Pyromellitsäure, 3,3',4,4'-Biphenyltetracarbonsäure, 2,3,3',4'-Biphenyltetracarbonsäure, 2,2',3,3'-Biphenyltetracarbonsäure, 3,3',4,4'-Benzophenontetracarbonsäure, 2,2',3,3'-Benzophenontetracarbonsäure, 1,2,5,6-Naphthalintetracarbonsäure, 2,3,6,7-Naphthalintetracarbonsäure, 2,3,5,6-Pyridintetracarbonsäure, 3,4,9,10-Perylentetracarbonsäure, 3,3',4,4'-Tetraphenylsilantetracarbonsäure und 2,2'-Bis(3,4-bicarboxyphenyl)hexafluorpropantetracarbonsäure auswählt.

7. Verfahren nach einem der vorhergehenden Ansprüche, **dadurch gekennzeichnet, dass** es sich bei dem Diamin bzw. den Diaminen um Moleküle der Formel H₂N-R-NH₂ mit einem linearen oder verzweigten, gesättigten oder ungesättigten aliphatischen, cycloaliphatischen oder aromatischen Rest R, der gegebenenfalls ein oder mehrere Heteroatome umfasst, handelt.

8. Verfahren nach Anspruch 7, **dadurch gekennzeichnet, dass** der Rest R 2 bis 50 Kohlenstoffatome und gegebenenfalls ein oder mehrere Heteroatome umfasst.

9. Verfahren nach einem der vorhergehenden Ansprüche, **dadurch gekennzeichnet, dass** man das Diamin bzw. die Diamine aus aliphatischen Diaminen und vorzugsweise aus 1,2-Diaminoethan, 1,3-Diaminopropan, 1,4-Diaminobutan, 1,5-Diaminopentan, 2-Methyl-1,5-diaminopentan, Hexamethylendiamin, 3-Methylhexamethylendiamin, 2,5-Dimethylhexamethylendiamin, 2,2,4- und 2,4,4-Trimethylhexamethylendiamin, 1,7-Diaminoheptan, 1,8-Diaminooctan, 2,2,7,7-Tetramethyloctamethylendiamin, 1,9-Diaminononan, 5-Methyl-1,9-diaminononan, 1,10-Diaminodecan, 1,11-Diaminoundecan, 1,12-Diaminododecan, 1,13-Diaminotridecan und 1,14-Diaminotetradecan auswählt.

10. Verfahren nach einem der Ansprüche 1 bis 8, **dadurch gekennzeichnet, dass** man das Diamin bzw. die Diamine aus cycloaliphatischen Diaminen und vorzugsweise aus Isophorondiamin, 1,3-Diaminocyclohexan, 1,4-Diaminocyclohexan, Diaminodicyclohexylmethan, 1,3-Bis(aminomethyl)cyclohexan, 4,4'-Methylenbis(cyclohexylamin) und 4,4'-Methylenbis(2-methylcyclohexylamin) auswählt.

11. Verfahren nach einem der Ansprüche 1 bis 8, **dadurch gekennzeichnet, dass** man das Diamin bzw. die Diamine aus aromatischen Diaminen und vorzugsweise aus m-Phenylendiamin, p-Phenylendiamin, 3,4'-Diaminodiphenylether, 4,4'-Diaminodiphenylether, m-Xylylendiamin und p-Xylylendiamin auswählt.

12. Verfahren nach einem der vorhergehenden Ansprüche, **dadurch gekennzeichnet, dass** es sich bei dem Kettenabbruchmittel bzw. den Kettenabbruchmitteln um Verbindungen (C) mit einer oder mehreren Gruppen, die aus einer Amingruppe, einer Carbonsäuregruppe, einer Anhydridgruppe, einer Estergruppe und einer Acylchloridgruppe ausgewählt sind, handelt.

13. Verfahren nach einem der vorhergehenden Ansprüche, **dadurch gekennzeichnet, dass** man Schritt (b) durch Festphasenpolymerisation durchführt, indem man die direkt aus Schritt (a) erhaltene Mischung auf eine Temperatur größer oder gleich 150 °C und vorzugsweise im Bereich von 150 bis 250 °C bringt und in Schritt (b) die Polymerisation bei einem Absolutdruck im Bereich von 0,005 bis 1 MPa durchgeführt wird.

## Claims

1. Process for manufacturing an aromatic polyimide, **characterized in that** it comprises the following steps:
(a) preparing one or more salts by reacting one or more aromatic tetracarboxylic acids in solid form and one or more diamines, optionally in the presence of one or more chain-limiting agents, in the presence of one or more binders, comprising one or more organic liquids, in an amount of from 1% to 25% by weight relative to the total weight of the aromatic tetracarboxylic acid(s), the diamine(s) and the optional chain-limiting agent(s); and then
(b) polymerization of the salt(s) obtained in step (a) ;
**characterized in that** the binder(s) are present in an amount ranging from 5% to 20% by weight, preferably from 10% to 20% by weight, relative to the total weight of the aromatic tetracarboxylic acid(s), the diamine(s) and the optional chain-limiting agent(s).

2. Process according to Claim 1, **characterized in that** the organic liquid(s) are chosen from C₁-C₄ and preferentially C₁-C₃ alcohols, ketones, and mixtures thereof.

3. Process according to either of Claims 1 and 2, **characterized in that**, during step (a), the binder(s) are introduced either with the diamine(s) and/or with the chain-limiting agent(s), or independently of the diamine(s) and/or of the chain-limiting agent(s).

4. Process according to one of the preceding claims, **characterized in that** the polymerization is performed during step (b) in the solid state, in the molten state, or in liquid medium.

5. Process according to one of the preceding claims, **characterized in that** the salt(s) are prepared by reacting the aromatic tetracarboxylic acid(s) and the diamine(s) in a mole ratio of the aromatic tetracarboxylic acid(s) to the diamine(s) ranging from 0.70 to 1.30 and preferentially from 0.95 to 1.05.

6. Process according to one of the preceding claims, **characterized in that** said aromatic tetracarboxylic acid(s) are chosen from pyromellitic acid, 3,3',4,4'-biphenyltetracarboxylic acid, 2,3,3',4'-biphenyltetracarboxylic acid, 2,2',3,3'-biphenyltetracarboxylic acid, 3,3',4,4'-benzophenonetetracarboxylic acid, 2,2',3,3'-benzophenonetetracarboxylic acid, 1,2,5,6-naphthalenetetracarboxylic acid, 2,3,6,7-naphthalenetetracarboxylic acid, 2,3,5,6-pyridinetetracarboxylic acid, 3,4,9,10-perylenetetracarboxylic acid, 3,3',4,4'-tetraphenylsilanetetracarboxylic acid, and 2,2'-bis(3,4-bicarboxyphenyl)hexafluoropropanetetracarboxylic acid.

7. Process according to one of the preceding claims, **characterized in that** the diamine(s) are molecules of formula H₂N-R-NH₂ with a linear or branched, saturated or unsaturated aliphatic, cycloaliphatic or aromatic divalent hydrocarbon-based radical R, optionally comprising one or more heteroatoms.

8. Process according to Claim 7, **characterized in that** the radical R comprises from 2 to 50 carbon atoms, and optionally one or more heteroatoms.

9. Process according to one of the preceding claims, **characterized in that** the diamine(s) are chosen from aliphatic diamines, and preferably from 1,2-diaminoethane, 1,3-diaminopropane, 1,4-diaminobutane, 1,5-diaminopentane, 2-methyl-1,5-diaminopentane, hexamethylenediamine, 3-methylhexamethylenediamine, 2,5-dimethylhexamethylenediamine, 2,2,4- and 2,4,4-trimethylhexamethylenediamine, 1,7-diaminoheptane, 1,8-diaminooctane, 2,2,7,7-tetramethyloctamethylenediamine, 1,9-diaminononane, 5-methyl-1,9-diaminononane, 1,10-diaminodecane, 1,11-diaminoundecane, 1,12-diaminododecane, 1,13-diaminotridecane, and 1,14-diaminotetradecane.

10. Process according to one of Claims 1 to 8, **characterized in that** the diamine(s) are chosen from cycloaliphatic diamines, and preferably from isophorone diamine, 1,3-diaminocyclohexane, 1,4-diaminocyclohexane, diaminodicyclohexylmethane, 1,3-bis(aminomethyl)-cyclohexane, 4,4'-methylenebis(cyclohexylamine) and 4,4'-methylenebis(2-methylcyclohexylamine).

11. Process according to one of Claims 1 to 8, **characterized in that** the diamine(s) are chosen from aromatic diamines, and preferably from m-phenylenediamine, p-phenylenediamine, 3,4'-diaminodiphenyl ether, 4,4'-diaminodiphenyl ether, m-xylylenediamine and p-xylylenediamine.

12. Process according to one of the preceding claims, **characterized in that** said chain-limiting agent(s) are compounds (C) comprising one or more groups chosen from an amine group, a carboxylic acid group, an anhydride group, an ester group and an acyl chloride group.

13. Process according to one of the preceding claims, **characterized in that** step (b) is performed by polymerization in the solid state, by bringing the mixture obtained directly from step (a) to a temperature of greater than or equal to 150°C, preferably ranging from 150 to 250°C, and **in that**, during step (b), the polymerization is performed at an absolute pressure ranging from 0.005 to 1 MPa.
